# FASCICULE DE BREVET EUROPEEN

(11) **EP 3 177 135 B1**
(45) Date de publication et mention de la délivrance du brevet: **30.01.2019**
(21) Numéro de dépôt: 15738327.4
(22) Date de dépôt: 15.07.2015
(51) Int. Cl.: A01K 13/00, A45D 24/04, A45D 24/30

(54) **PEIGNE POUR BROSSE DE TOILETTAGE DE LA FOURRURE DES ANIMAUX**
KAMM FÜR EINE BÜRSTE ZUR PFLEGE EINES TIERPELZES
COMB FOR A BRUSH FOR GROOMING ANIMAL FUR

(30) Priorité: 09.08.2014 FR 1457732
(43) Date de publication de la demande: 14.06.2017
(73) Titulaire: SSERTSON GROUP, 42610 Saint-Romain Le Puy (FR)
(72) Inventeur: BERGER, Jacqueline Jeanne Clémence, 42340 Veauche (FR); DEBIAUNE, Xavier, 42170 Saint Just Saint Rambert (FR); CATHAUD, Eddy, 42240 L'Hôpital le Grand (FR)
(74) Mandataire: Jacobacci Coralis Harle
(86) Numéro de dépôt international: PCT/EP2015/066116
(87) Numéro de publication internationale: WO 2016/023699

(56) Documents cités:
- DE-C- 219 426
- US-A1- 2009 314 305
- US-A1- 2011 067 644
- US-A1- 2011 259 281
- US-A1- 2013 180 464

## Description

L'invention concerne le toilettage de la fourrure des animaux et plus particulièrement un peigne pour brosse manuelle.

Pour entretenir la fourrure des animaux domestiques, tels que chiens et chats, il est connu de les brosser manuellement avec une brosse composée d'un manche avec une tête de réception d'un peigne amovible et interchangeable. Dans les brosses actuelles le peigne est réalisé dans une lame métallique dont le corps est pourvu de moyens de fixation sur la tête du manche et d'un bord en biseau dans lequel les dents sont réalisées par usinage.

Cette solution est utilisée depuis longtemps car elle donne aux dents un pouvoir « raclant » qui leur permet de débarasser le pelage des poils morts tout en enlevant les pellicules superficielles.

En raison de leur mode de fabrication par usinage, ces dentures ont des dents acérées qui peuvent, en l'absence de précautions de la personne effectuant le toilettage, blesser la peau de l'animal par leur pouvoir tranchant, casser les poils de la fourrure par la rigidité du peigne métallique et, en coupant trop de poils par leurs arêtes acérées, aller jusqu'à former des manques dans la fourrure. De plus, selon les moyens d'usinage utilisés, ces dentures présentent des arêtes en « dents de scie » visibles au microscope qui endommagent le pelage. Ces mêmes caractéristiques rendent compliqués l'entretien et le nettoyage de cet outil, ce qui peut etre malsain pour l'animal.

On connait par le document US2011/0259281 un peigne pour brosse manuelle de toilettage du pelage des animaux réalisée dans une lame dont le corps est pourvu de moyens de fixation sur un support de brossage avec un manche. Cette lame comprend sur un bord denté de son corps lamellaire deux dentures disposées de part et d'autre d'un plan médian de ce corps et dont les dents s'intercalent. Ces dents sont délimitées entre une face externe plane, parallèle au plan médian du corps lamellaire et une face interne, également plane et parallèle au plan médian du corps lamellaire et de ce fait présentent des arêtes aigues, pouvant abimer le pelage. On connaît de plus par le document US2013/0180464 un peigne pour brosse manuelle de toilettage du pelage des animaux suivant le préambule de la revendication 1.

L'objet de l'invention est de fournir un peigne améliorant au contraire le traitement du pelage lors de l'opération de toilettage, tout en respectant le bien-être de l'animal, en ne provocant pas de blessures ou de marques dans la fourrure de l'animal.

Elle concerne donc un peigne, suivant la revendication 1, réalisé dans un corps lamellaire pourvu de moyens de fixation sur un support de brossage avec manche et comprenant, sur un bord denté, deux dentures disposées de part et d'autre d'un plan médian du corps et dont les dents s'intercalent.

Selon l'invention, les dents des deux dentures sont munies d'arrondis anti blessures à leur pointe et sur une partie de la longueur des arêtes partant de leur extrémité, et sont délimitées entre une face externe, plane et parallèle au plan médian du corps lamellaire, et une face interne courbe, à savoir une denture principale avec des dents longues et une denture secondaire avec des dents plus courtes et plus minces que celles de la denture principale.

En pratique, la denture principale est affectée au brossage des fourrures denses ou épaisses, par exemple des fourrures de saisons froides, tandis que la denture secondaire est affectée au brossage des fourrures moins denses avec des poils plus fins, ou au brossage d'une fourrure de saisons chaudes.

Dans tous les cas, l'engagement du peigne dans la fourrure s'effectue sans dommage pour l'animal, même si les dents viennent au contact de sa peau, car leurs extrémités et bords arrondis ne peuvent générer aucune blessure, au contraire des peignes métalliques à denture usinée présentant des arêtes et pointes vives.

Lorsque la brosse est déplacée dans la fourrure de l'animal, la première denture venant en contact avec les poils par le déplacement de la brosse assure le brossage, en débarassant la fourrure des poils morts, des peaux mortes, des poussières et épillets, tandis que la seconde denture renforce l'action par un double brossage au niveau de la fourrure, sans toucher la peau, et assure un lissage « doux » des poils, dès qu'ils sont relachés par l'autre denture.

Dans une forme de réalisation, au moins les dents de la denture principale présentent une face interne convexe, favorisant le glissement des poils.

Dans une autre réalisation, quand les dents de la denture principale présentent une face interne convexe, celles de la denture secondaire présentent un face interne concave.

Cela permet de former sur les dents et entre les dents des plateaux pentus qui, selon le sens de déplacement du peigne, accueillent les poils morts, des peaux mortes, et des poussières et débarassent la fourrure de leur présence en améliorant l'effet du brossage et la brillance du poil.

Avantageusement, le peigne est réalisé par moulage de métal ou de matière plastique.

Cela permet d'obtenir des peignes identiques de haute qualité, ne nécessitant pas d'usinage complexe et dont les dents présentent des bords arrondis réguliers et des bouts arrondis ne pouvant pas blesser la peau de l'animal.

Dans une forme de réalisation, les dents de chacune des deux dentures ont une section transversale qui va de la forme circulaire à une forme rectangulaire à arêtes arrondies en allant de leur extrémité vers le corps de lame.

Cet aménagement favorise le contact et améliore aussi le lissage des poils par les faces planes de l'entredent.

D'autres caractéristiques et avantages ressortiront de la description qui suit, en référence au dessin schématique annexé, représentant plusieurs formes d'exécution de ce peigne.
Figure 1 est une vue de face en élévation d'une forme d'exécution du peigne vue du côté de la denture secondaire pour fourrure fine ;
Figure 2 est une vue schématique montrant l'évolution de la forme des sections des dents des deux dentures à partir de coupes effectuées selon les sections S1 à S5 de figure 1 ;
Figure 3 est une vue de face en élévation d'une autre forme d'exécution du peigne vue du côté de la denture longue pour fourrure épaisse ;
Figures 4 et 5 sont des vues en coupe suivant IV-IV et V-V de figure 1, montrant respectivement une dent de la denture principale pour fourrure épaisse et une dent de la denture secondaire pour fourrure fine ;
Figures 6 et 7 sont des vues partielles montrant, à échelle agrandie les formes des fonds d'entredent entre denture principale et denture secondaire ;
Figure 8 est une vue en perspective d'un peigne vue du côté de la denture principale ;
Figure 9 est une vue de côté en élévation d'une brosse équipée du peigne selon l'invention, lors d'une opération de brossage avec la denture principale positionnée en avant ;
Figure 10 est une vue partielle avec coupe du peigne montrant, à échelle très agrandie, l'action des dentures sur le pelage d'un animal ;
Figures 11 et 12 sont des vues similaires aux figures 9 et 10, mais lors d'une opération de brossage avec la denture secondaire positionnée en avant.

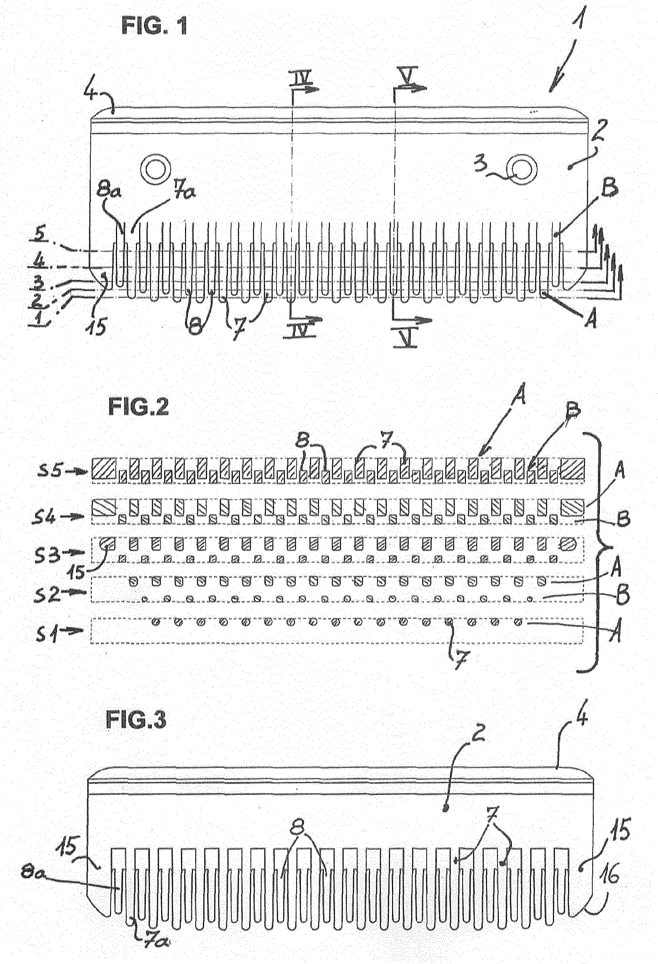

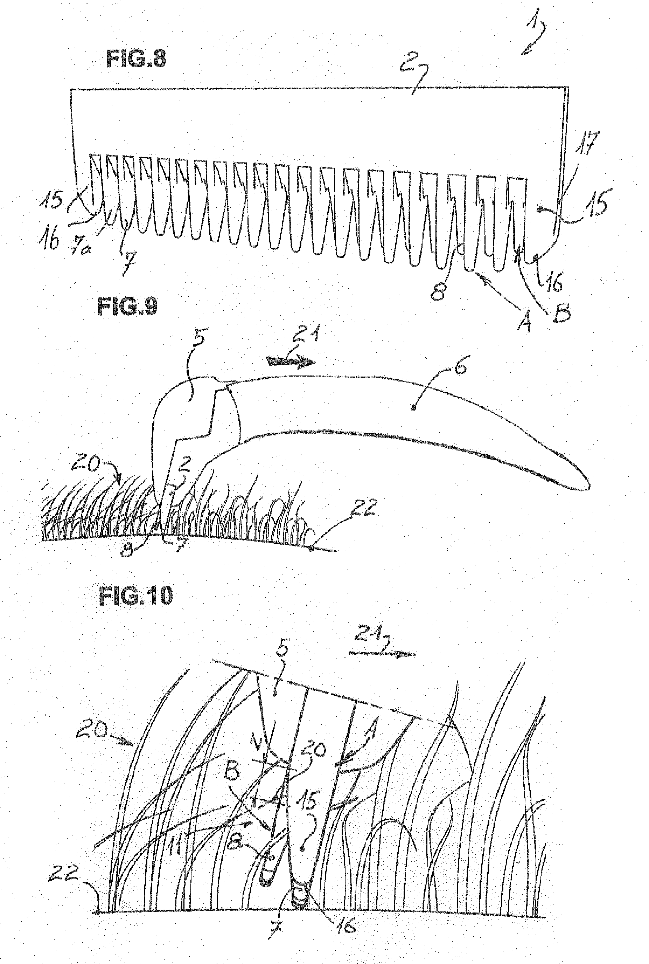

De manière générale et comme montré figure 1, le peigne 1 selon l'invention est constitué par un corps lamellaire 2 muni dans son talon de moyens de fixation 3 ou 4 sur une tête 5 avec manche 6, visible figure 9.

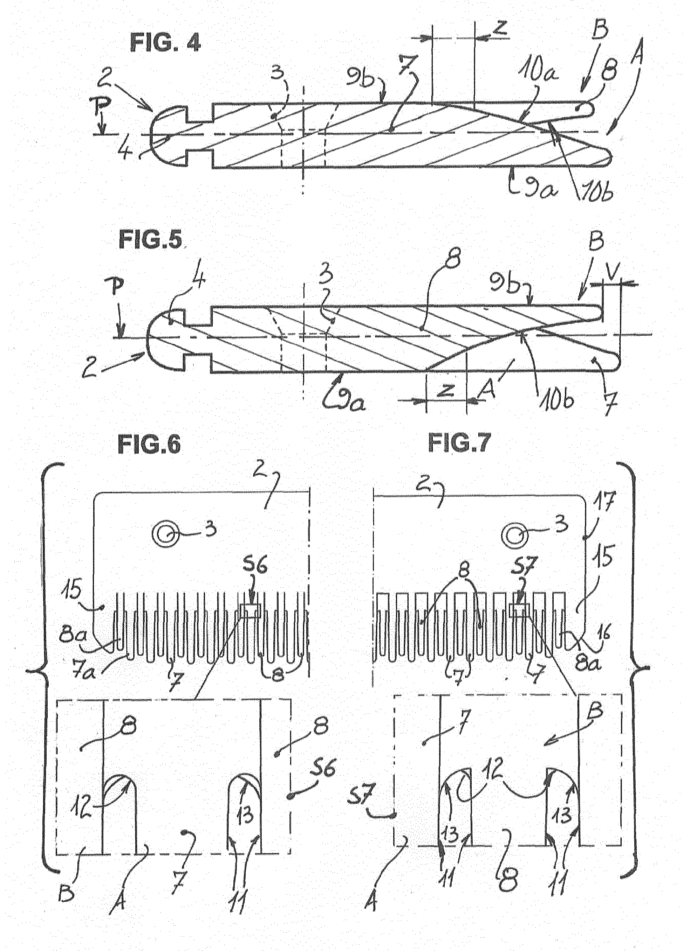

Dans la forme d'exécution de l'invention représentée aux figures, le corps lamellaire 2 comporte un bord denté formé par deux dentures, respectivement, principale A et secondaire B, disposées de part et d'autre du plan médian P du peigne (figures 4 et 5) et composées de dents 7 et 8. Les dents 7 de la denture principale A sont intercalées avec les dents 8 de la denture secondaire B et sont délimitées, comme elles, entre une face externe plane, respectivement 9a et 9b, correspondant aux faces du corps lamellaire, et une face interne courbe, respectivement 10a et 10b, formée à l'extrémité des dents. Les faces 9a et 9b, 10a et 10b et les faces d'entredents 11 sont lisses et sans aspérités de manière à faciliter le glissement des poils contre elles.

Cela est obtenu d'autant plus facilement que chaque corps lamellaire 2 avec son peigne à double denture A et B est obtenu par moulage d'une matière, tel que métal ou matière plastique, possédant un bon coefficient de glissement et une souplesse pour éviter des tensions dans le pelage. Dans une variante de fabrication le corps et les peignes sont obtenus par impression 3D.

Dans la forme d'exécution de figure 4, qui représente en coupe une dent 7 de la denture principale A, la face interne 10a de cette dent 7 est convexe, alors que, à la figure 5, la face 10b d'une dent 8 de la denture secondaire B est concave. Ces figures montrent aussi que les dents 7 de la denture principale A sont plus longues que celles 8 de la denture secondaire B d'une valeur V.

Dans cette réalisation, la différence entre les longueurs des dentures A et B est de l'ordre de 5 à 20% de la longueur d'une dent 7 de la denture A la plus longue. Ces dimensions peuvent varier suivant l'action ciblée recherchée.

Par ailleurs, la longueur des dentures A et B est comprise entre la moitié et les deux cinquièmes de la largeur du corps lamellaire 2, en fonction des moyens de fixation de ce corps lamellaire sur le corps de brosse 5, à savoir par vis traversant les trous 3 ménagés dans le corps 2 ou par engagement d'un tenon en T 4 du corps 2 dans une rainure du corps de brosse. Ces proportions peuvent changer suivant le type de brosse utilisée.

La figure 2 qui répertorie les sections S1 à S5 obtenue par les coupes 1 à 5 de figure 1, montre que la section transversale de chacune des dents 7 et 8 des deux dentures A et B passe d'une forme circulaire (en S1 et S2) à une forme carrée puis rectangulaire à arêtes arrondies (en S3 et S4), puis non arrondies (en S5) en allant de la pointe arrondie de chaque dent vers sa liaison au corps lamellaire 2. Cela caractérise la présence d'extrémités arrondies puis d'arêtes arrondies s'étendant sur une partie de la longueur des dents, afin de ne pas favoriser l'arrachement ou le sectionnement des poils.

La jonction des dents avec le corps lamellaire 2 est sans arêtes arrondies, comme montrée en S5. Cette organisation forme un plateau pentu Z permettant de stocker les poils morts peignés. Cette zone Z favorise aussi le nettoyage et le stockage des poils morts, en libérant ainsi les dentures pour un brossage optimal.

La figure 2 met aussi en évidence que la section transversale de chacune des dents 8 de la denture secondaire B est plus petite que celle des dents 7 de la denture principale A.

Les figures 6 et 7 montrent, par leurs sections agrandies S6 et S7 de l'entredent des dentures, respectivement B et A, que le fond de cet entredent a une section qui varie, en allant transversalement dans l'épaisseur du peigne, par exemple des petites dents 8 vers les grandes dents 7, de la forme semi circulaire 12, de figure 6, à la forme en arc de cercle 13 venant buter contre le flanc de la dent 8, comme montré figure 7. Chaque entredent délimite ainsi un couloir transversal, collectant les poils de la fourrure brossée en les dirigeant vers les faces latérales droites et planes 11 à la base des dents favorisant l'enlèvement des poils morts, des peaux mortes, poussières et épillets, en lissant ces poils.

Comme le montrent les figures 1, 3 et 6 à 8, quand le peigne s'étend longitudinalement au-delà des extrémités des dentures A et B, il comprend deux doigts d'encadrement 15 qui ont chacun une longueur inférieure à celles des dents 7 et 8 et qui sont munis d'un bout arrondi 16 et d'arêtes arrondies 17. Dans le même but de ne pas donner au peigne la possibilité de blesser la peau de l'animal, les dents 7a et 8a qui sont disposés contre les doigts d'encadrement 15 ont une longueur qui va en décroissant en allant vers ces doigts d'encadrement.

Il faut noter que pour s'adapter au mieux à la taille des animaux pouvant être brossés et toilettés, par exemple du Chihaha au Saint Bernard, le peigne est fourni en plusieurs tailles se différenciant par la largeur des dentures et la longueur des dents. De plus, comme les animaux n'ont pas la même densité de fourrure, les peignes sont fournis avec différentes configurations leur permettant d'être utilisés pour différents animaux en s'adaptant à leurs à l'épaisseur, et à la longueur de leur pelage.

La description, qui précède, différencie les dentures A et B de manière générale en leur ajoutant « principale » et « secondaire », mais dans la forme d'exécution qui suit ces mêmes dentures sont définies par leur utilisation, à savoir, « pour fourrure épaisse » pour la denture A et « pour fourrure fine » pour la denture B. Comme le pelage d'un même animal peut, selon les saisons, passer d'une fourrure épaisse à une fourrure plus aérée, et inversement, l'utilisateur de la brosse peut profiter de l'amovibilité du peigne pour le retourner sur la tête 5 de la brosse et venir en contact avec les poils par la denture correspondant le mieux à la densité de la fourrure.

La figure 9 montre une brosse dans laquelle le peigne 2 est disposé de manière que ce soit la denture principale A « pour fourrure épaisse » soit en avant et vienne en contact avec les poils 20 quand la brosse est déplacée selon la flèche 21, la denture B étant donc en arrière. Avec la figure 10, elle montre que le peigne avec ces deux dentures, denture principale positionnée en avant, s'engage sans difficultés dans le pelage et que son contact avec la peau 22 s'effectue par les extrémités arrondies de sa denture 7, donc sans pouvoir blesser la peau.

Lors du mouvement de brossage les poils 20 passent dans les couloirs des entredents et qui les rabattent contre les faces latérales 11 des dents 8 de la denture B, faces débarassant la fourrure des poils morts, des déchets, poussières et épillets,en les stockant sur les zones Z, tout en assurant par les faces 11 un lissage doux de ces poils, dès qu'ils sont relachés par la denture A.

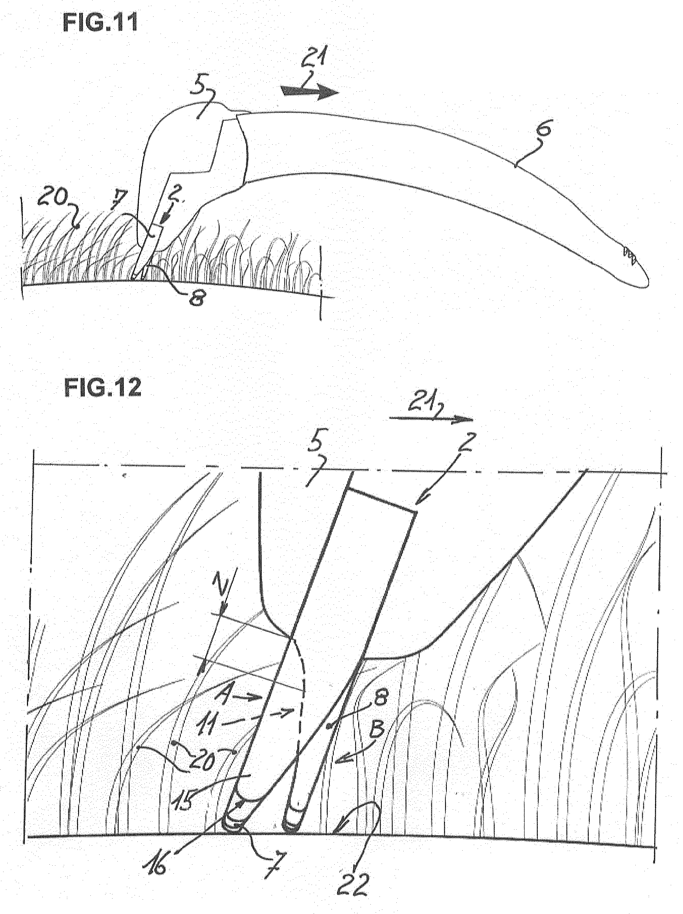

A la figure 11, le peigne est monté sur la tête 5 de la brosse de manière que ce soit la denture secondaire B qui soit en avant et vienne en premier contre les poils 20, quand le manche est tiré selon la flèche 21.

La figure 12 montre que la brosse est tenue manuellement avec une inclinaison du manche de manière que les deux dentures A et B soient en contact avec la peau 22, pour répartir l'effort de contact sur la peau sans risquer de la blesser grâce aux extrémités arrondies. La pression des dents sur la peau étant répartie sur deux rangées la sensation de brossage est plus douce pour l'animal.

Cette position amenant les dentures près de la peau pour optimiser le brossage est spécifique de pelage à poils fins et est donc conseillée pour les zones « sensibles » et les zones avec peu de poils, comme les oreilles, les pattes, le cou et/ou les poils courts.

Lors du mouvement de brossage les poils 20 passent dans les couloirs des entredents et qui les rabattent contre les faces latérales 11 des dents 7 de la denture A, faces débarassant la fourrure des poils morts, des déchets, poussières et épillets, tout en assurant un lissage doux de ces poils, dès qu'ils sont relachés par la denture B. Ainsi, la denture principale A, positionnée en arrière, a une fonction de « renfort » du brossage, et, avec sa forme convexe et ses plateaux pentus Z, regroupe et retient les poils morts, peaux mortes, péllicules, poussières et épillets, qui peuvent être extrait quand la brosse est retirée du pelage.

## Revendications

1. Peigne pour brosse manuelle de toilettage de la fourrure des animaux, le dit peigne (1) étant réalisé dans une lame dont le corps (2) est pourvu de moyens de fixation sur un support de brossage (5) avec manche (6) et comprend, sur un bord denté, deux dentures A et B aptes à pénétrer dans le pelage, disposées de part et d'autre d'un plan médian P du corps lamellaire et dont les dents (7 et 8) s'intercalent, **caractérisée en ce que** les dents sont munies d'arrondis anti blessures à leur extrémité et sur une partie de la longueur des arêtes partant de cette extrémité, et sont délimitées entre une face externe (9a, 9b), plane et parallèle au plan médian P du corps lamellaire, et une face interne extrême courbe, à savoir une denture principale A avec des dents longues et une denture secondaire B avec des dents plus courtes et plus minces que celles de la denture principale.

2. Peigne pour brosse manuelle de toilettage de la fourrure des animaux, selon la revendication 1 **caractérisé en ce qu'**au moins les dents (7) de la denture principale A présentent une face interne convexe (10a), favorisant le glissement des poils

3. Peigne pour brosse manuelle de toilettage de la fourrure des animaux, selon les revendications 1 et 2 prises ensemble **caractérisé en ce que** les dents (8) de la denture secondaire B présentent une face interne concave (10b).

4. Peigne pour brosse manuelle de toilettage de la fourrure des animaux, selon la revendication 1 **caractérisé en ce que** les dents (7 et 8) de chacune des deux dentures A et B ont une section transversale qui va de la forme circulaire à une forme rectangulaire en allant de leur extrémité vers le talon du corps lamellaire (2).

5. Peigne pour brosse manuelle de toilettage de la fourrure des animaux, selon la revendication 1 **caractérisé en ce que** les faces internes (10a et 10b) et les faces externes (9a et 9b) des dents (7et 8), de même que les faces (11) des entredents formés entre les deux dentures, sont lisses et sans aspérités.

6. Peigne pour brosse manuelle de toilettage de la fourrure des animaux, selon la revendication 1 **caractérisé en ce que** le fond de l'entredent entre les dents (7 et 8) des deux dentures A et B a une forme qui varie, en allant du coté des petites dents (8) vers le cotés des grandes dents (7), d'une forme semi circulaire (12) à une forme en arc de cercle (13) venant buter contre le flanc (11) de la dent, en délimitant un couloir transversal collectant les poils morts et impuretés.

7. Peigne pour brosse manuelle de toilettage de la fourrure des animaux, selon la revendication 1 **caractérisé en ce que** les dents des deux dentures A et B s'étendent sur sensiblement les 2/5 de la largeur du corps lamellaire (2) et la différence de longueurs entre les dents (7) de la denture principale A et celles (8) de la denture secondaire B est comprise entre 5 et 20% de la longueur des dents de la denture A.

8. Peigne pour brosse manuelle de toilettage de la fourrure des animaux, selon la revendication 1 **caractérisé en ce que** le corps lamellaire (2) et ses dentures A et B sont réalisées par moulage ou impression 3D en une matière, telle que métal ou matière plastique, possédant un bon coefficient de glissement et une souplesse évitant des tensions dans le pelage.

9. Peigne pour brosse manuelle de toilettage de la fourrure des animaux, selon la revendication 1 **caractérisé en ce que** le corps lamellaire (2) s'étend longitudinalement au delà des deux dentures A et B par des doigts d'encadrement (15) présentant une extrémité arrondie (16) et des arrêtes arrondis et ayant une moindre longueur que les dents 7 et 8 des deux dentures A et B.

10. Peigne pour brosse manuelle de toilettage de la fourrure des animaux, selon les revendications 1 et 9 prises ensemble **caractérisé en ce que** les dents (7a et 8a) des deux dentures disposées contre les doigts d'encadrement (15) ont une longueur qui va en décroissant en allant vers ces doigts d'encadrement.

## Patentansprüche

1. Kamm für eine Bürste zur Pflege des Fells von Tieren, wobei der Kamm (1) aus einer Klinge hergestellt ist, deren Körper (2) mit Mitteln zum Befestigen an einem Bürstenhalter (5) mit Griff (6) versehen ist und an einem gezahnten Rand zwei Zahnungen A und B aufweist, die dazu ausgelegt sind, in das Fell einzudringen, beiderseits einer Mittelebene P des lamellenartigen Körpers angeordnet sind und deren Zähne (7 und 8) miteinander verschachtelt sind, **dadurch gekennzeichnet, daß** die Zähne an deren Ende und über einen Teil der Länge der von diesem Ende ausgehenden Kanten mit vor Verletzungen schützenden Abrundungen versehen sind und zwischen einer ebenen und zur Mittelebene P des lamellenartigen Körpers parallelen Außenseite (9a, 9b) und einer gekrümmten Endinnenseite begrenzt sind, das heißt eine Hauptzahnung A mit langen Zähnen und eine Sekundärzahnung B mit kürzeren und schmaleren Zähnen als jenen der Hauptzahnung.

2. Kamm für eine Bürste zur Pflege des Fells von Tieren gemäß Anspruch 1, **dadurch gekennzeichnet, daß** wenigstens die Zähne (7) der Hauptzahnung A eine konvexe Innenseite (10a) aufweisen, die das Gleiten der Haare fördern.

3. Kamm für eine Bürste zur Pflege des Fells von Tieren gemäß den Ansprüchen 1 und 2 zusammengenommen, **dadurch gekennzeichnet, daß** die Zähne (8) der Sekundärzahnung B eine konkave Innenseite (10b) aufweisen.

4. Kamm für eine Bürste zur Pflege des Fells von Tieren gemäß Anspruch 1, **dadurch gekennzeichnet, daß** die Zähne (7 und 8) der beiden Zahnungen A und B einen Querschnitt aufweisen, der von deren Ende zum Absatz des lamellenartigen Körpers (2) hin von der runden Form zu einer rechteckigen Form übergeht.

5. Kamm für eine Bürste zur Pflege des Fells von Tieren gemäß Anspruch 1, **dadurch gekennzeichnet, daß** die Innenseiten (10a und 10b) und die Außenseiten (9a und 9b) ebenso wie die Seiten (11) der zwischen den beiden Zahnungen ausgebildeten Zahnzwischenräume glatt und ohne Unebenheiten sind.

6. Kamm für eine Bürste zur Pflege des Fells von Tieren gemäß Anspruch 1, **dadurch gekennzeichnet, daß** der Grund der Zahnzwischenräume zwischen den Zähnen (7 und 8) der beiden Zahnungen A und B eine Form hat, die sich von der Seite der kleinen Zähne (8) zur Seite der großen Zähne (7) hin von einer halbrunden Form (12) zur einer Kreisbogenform (13) ändert, die gegen die Zahnflanke (11) stößt und dabei einen Querkanal begrenzt, der die toten Haare und Verunreinigungen sammelt.

7. Kamm für eine Bürste zur Pflege des Fells von Tieren gemäß Anspruch 1, **dadurch gekennzeichnet, daß** sich die Zähne der beiden Zahnungen A und B über etwa 2/5 der Breite des lamellenartigen Körpers (2) erstrecken und der Längenunterschied zwischen den Zähnen (7) der Hauptzahnung A und jenen (8) der Sekundärzahnung B zwischen 5 und 20 % der Länge der Zähne der Zahnung A beträgt.

8. Kamm für eine Bürste zur Pflege des Fells von Tieren gemäß Anspruch 1, **dadurch gekennzeichnet, daß** der lamellenartige Körper (2) und seine Zahnungen A und B durch Gießen oder 3D-Druck aus einem Material wie zum Beispiel Metall oder Kunststoff hergestellt sind, das einen guten Gleitkoeffizienten und eine Spannungen im Fell verhindernde Biegsamkeit aufweist.

9. Kamm für eine Bürste zur Pflege des Fells von Tieren gemäß Anspruch 1, **dadurch gekennzeichnet, daß** sich der lamellenartige Körper (2) durch Rahmenzähne (15), die ein abgerundetes Ende (16) und abgerundete Rücken aufweisen und eine geringere Länge als die Zähne 7 und 8 der beiden Zahnungen A und B haben, längs über die beiden Zahnungen A und B hinaus erstreckt.

10. Kamm für eine Bürste zur Pflege des Fells von Tieren gemäß den Ansprüchen 1 und 9 zusammengenommen, **dadurch gekennzeichnet, daß** die Zähne (7a und 8a) der beiden Zahnungen, die an den Rahmenzähnen (15) angeordnet sind, eine Länge aufweisen, die zu den Rahmenzähnen hin abnimmt.

## Claims

1. Comb for manual brush for grooming animal fur, said comb (1) being made from a blade of which the body (2) is provided with means for fastening on a support for brushing (5) with a handle (6) and comprises, on a toothed edge, two sets of teeth A and B able to penetrate into the coat of hair, positioned on either side of a mid-plane P of the lamellar body and of which the teeth (7 and 8) are intercalated with one another, **characterised in that** the teeth are provided with anti-injury roundings at the end thereof and over a portion of the length of the edges starting from this end, and are delimited between an external face (9a, 9b), plane and parallel to the mid plane P of the lamellar body, and a curved extreme internal face, namely a main set of teeth A with long teeth and a secondary set of teeth B with shorter teeth and thinner than those of the main set of teeth.

2. Comb for manual brush for grooming animal fur, according to claim 1 **characterised in that** at least the teeth (7) of the main set of teeth A have a convex internal face interne (10a), that favours the sliding of the hairs.

3. Comb for manual brush for grooming animal fur, according to claims 1 and 2 taken together **characterised in that** the teeth (8) of the secondary set of teeth B have a concave internal face (10b).

4. Comb for manual brush for grooming animal fur, according to claim 1 **characterised in that** the teeth (7 and 8) of each one of the two sets of teeth A and B have a cross-section which goes from the circular shape to a rectangular shape by moving from their end towards the heel of the lamellar body (2).

5. Comb for manual brush for grooming animal fur, according to claim 1 **characterised in that** the internal faces (1 0a and 1Ob) and the external faces (9a and 9b) of the teeth (7 and 8), as well as the faces (11) of the toothgaps formed between the two sets of teeth, are smooth and without asperities.

6. Comb for manual brush for grooming animal fur, according to claim 1 **characterised in that** the bottom of the toothgap between the teeth (7 and 8) of the two sets of teeth A and B has a shape that varies, moving from the side of the small teeth (8) towards the sides of the large teeth (7), from a semi-circular shape (12) to a shape of an arc of a circle (13) butting against the flank (11) of the tooth, by delimiting a transversal corridor that collect dead hairs and impurities.

7. Comb for manual brush for grooming animal fur, according to claim 1 **characterised in that** the teeth of the two sets of teeth A and B extends over substantially 2/5 of the width of the lamellar body (2) and the difference in lengths between the teeth (7) of the main set of teeth A and those (8) of the secondary set of teeth B is between 5 and 20% of the length of the teeth of the set of teeth A.

8. Comb for manual brush for grooming animal fur, according to claim 1 **characterised in that** the lamellar body (2) and its sets of teeth A and B are carried out by moulding or 3D printing in a material, such as metal or a plastic material, that has a good sliding coefficient and a flexibility that avoids tension in the coat of hair.

9. Comb for manual brush for grooming animal fur, according to claim 1 **characterised in that** the lamellar body (2) extends longitudinally beyond the two sets of teeth A and B by framing fingers (15) having a rounded end (16) and rounded edges and having a lesser length than the teeth 7 and 8 of the two sets of teeth A and B.

10. Comb for manual brush for grooming animal fur, according to claims 1 and 9 taken together **characterised in that** the teeth (7a and 8a) of the two sets of teeth positioned against the framing fingers (15) have a length that decreases when moving towards these framing fingers.
